## Europäisches Patentamt
## European Patent Office
## Office européen des brevets

(19)

(11) Numéro de publication : **0 052 550
B1**

(12)

# FASCICULE DE BREVET EUROPÉEN

(45) Date de publication du fascicule du brevet :
20.02.85

(51) Int. Cl.⁴ : **G 01 N 29/04**

(21) Numéro de dépôt : **81401745.5**

(22) Date de dépôt : **30.10.81**

(54) Localisateur d'émission acoustique de défauts dans une structure fermée.

(30) Priorité : **07.11.80 FR 8023800**

(43) Date de publication de la demande :
**26.05.82 Bulletin 82/21**

(45) Mention de la délivrance du brevet :
**20.02.85 Bulletin 85/08**

(84) Etats contractants désignés :
**BE CH DE FR GB IT LI SE**

(56) Documents cités :
**DE-A- 2 606 302
FR-A- 1 132 714
FR-A- 2 164 031
FR-A- 2 195 798
FR-A- 2 304 088
GB-A- 1 391 175**

(73) Titulaire : **Framatome
Tour Fiat 1 place de la Coupole
F-92400 Courbevoie (FR)**

(72) Inventeur : **Marini, Jean
Chemin du Bois Martin
F-78160 Marly Le Roi (FR)**
Inventeur : **Audenard, Bernard
39bis rue du Docteur Maurer
Les Gallionets F-78630 Orgeval (FR)**

(74) Mandataire : **Lavoix, Jean et al
c/o Cabinet Lavoix 2, Place D'Estienne D'Orves
F-75441 Paris Cedex 09 (FR)**

## Description

La présente invention, due aux travaux de M. Audenard (Société CGR) et de M. Marini (Société FRAMATOME) concerne un localisateur de défauts par émission acoustique en circuit fermé. Elle est particulièrement adaptée au contrôle industriel des cordons de soudure de tubes.

Une installation industrielle comporte de nombreuses canalisations, tubulures, tubes, etc. Ces éléments servent le plus souvent de transporteurs de fluides, d'échangeurs thermiques, etc. Ils sont le plus souvent soumis à de fortes contraintes en température ou en pression, à d'importants échanges calorifiques, à des dilatations d'origine thermique, aux coups de boutoir des ouvertures de vanne, etc.

Le formage en enveloppe, en particulier, peut amener de micro-défauts, imperceptibles au microscope électronique. Mais en fonctionnement dans un milieu agressif, ces défauts peuvent croître. Cette croissance provoque une émission acoustique. Elle avertit donc d'un danger. C'est un but de la présente invention que de permettre une surveillance efficace de ces défauts submicroscopiques, d'une façon exploitable dans l'industrie.

De plus, les canalisations, qui peuvent atteindre de grandes longueurs, sont souvent constituées par des assemblages bout à bout de tubes. A chaque joint, on réalise par exemple un cordon de soudure en « V ». Au cours du soudage, des défauts peuvent être créés : inclusion de laitier, soufflures, manque de pénétration, etc. Ces défauts sont pourtant contrôlés à la livraison par radiographie X, gammagraphie, ultrasonographie, etc.

Il a été proposé dans l'art antérieur, des techniques dites d'écoute à l'émission acoustique. En effet, sous des actions diverses, les défauts qui apparaissent sont du genre fissures ou failles. Au cours de leur croissance, ils émettent des ondes acoustiques. Etant de très petites dimensions, on les considère comme des sources acoustiques ponctuelles. Les ondes se propagent selon différents modes, dans des directions diverses. Une fois reçues par des capteurs acoustiques, elles engendrent des signaux qui sont étudiés par calculateur, ce dernier pouvant fournir un certain nombre d'informations plus ou moins précises depuis une simple alarme au dépassement d'un seuil de risque donné, jusqu'à une visualisation complète du phénomène.

L'un des inconvénients majeurs de ces systèmes basés sur l'ordinateur est leur coût excessif pour une surveillance constante d'un grand ensemble. C'est un autre avantage de l'invention que de présenter une solution de contrôle par émission acoustique sans le secours d'un ordinateur.

La présente invention a pour objet un localisateur d'émission acoustique de défauts tel que décrit dans la revendication n° 1.

L'invention sera mieux comprise et divers avantages dégagés à l'aide de la description ainsi que des figures annexées qui sont :

— les figures 1a et 1b les vues d'une section circulaire de tube et son image sur les moyens de visualisation ;

— la figure 2 un schéma simplifié d'un exemple de réalisation de localisateur selon l'invention ;

— les figures 3 à 4 des détails de la figure 2 développés ;

— la figure 6 un diagramme d'un exemple de fonctionnement ;

— la figure 7 un schéma d'un autre exemple de réalisation de localisateur selon l'invention ;

— la figure 8 un dessin de l'image obtenu par le localisateur décrit à la figure 7 ;

— la figure 9 un détail de la figure 7.

L'exemple de réalisation préféré, maintenant décrit, comprend trois capteurs A, B et C placés régulièrement sur le pourtour de la section du tube examiné. Chaque capteur A, B ou C peut être du type piézoélectrique ou magnétostrictif ou encore à électret. Il transforme une impulsion acoustique, reçue sur la surface à laquelle il est couplé, en un signal électrique qui occupe une certaine bande de fréquence qui peut s'étendre parfois de 0 à 1 Mhz.

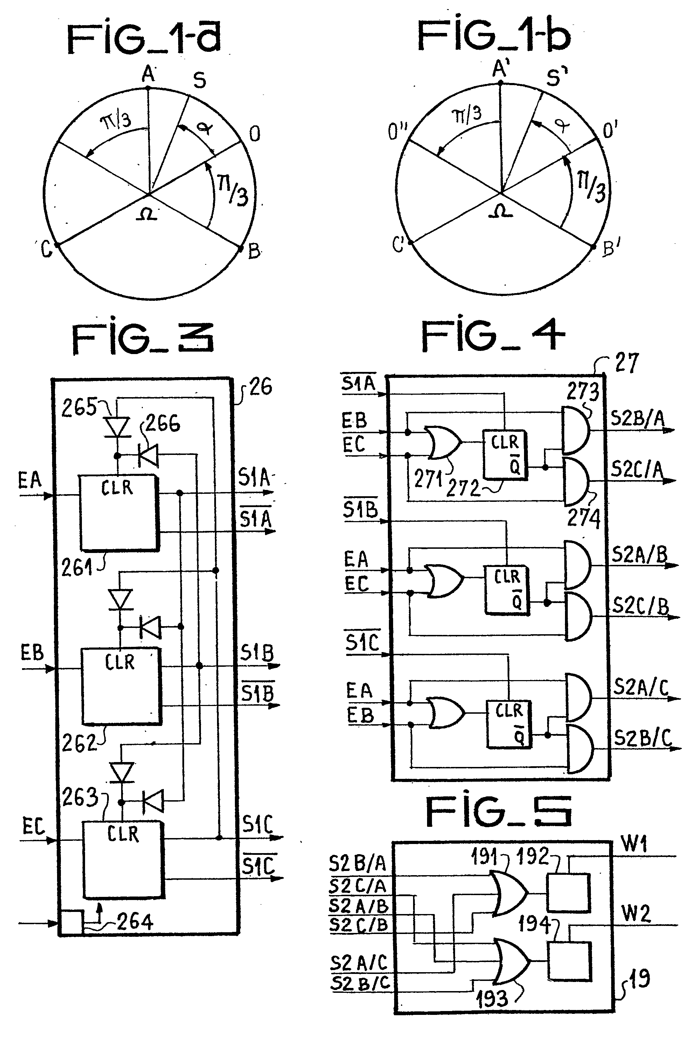

A la figure 1, la section 1 du tube examiné est circulaire. Toute autre forme fermée convient aussi. On désigne par $\Omega$ le centre de symétrie de la section, représentée ici par un trait sans épaisseur. Les trois capteurs A, B et C sont placés à 120° l'un de l'autre. L'axe $\Omega O$ est arbitrairement choisi comme axe polaire de référence. Le rayon de la section circulaire est R. Si un défaut apparaît au point S, celui-ci devient une source acoustique. Le mode de propagation de l'onde acoustique sera d'une façon majoritaire une onde de surface si l'épaisseur de matière du tube est faible et une onde de compression dans le cas contraire. A chacun de ces modes, en fonction de la forme de la section, de la nature du matériau et des différentes contraintes, correspond une vitesse C de propagation de l'onde dans la section. Cette vitesse C peut être mesurée et étalonnée avec le dispositif selon l'invention comme il sera décrit plus loin.

La source acoustique S a été représentée à droite du capteur A de telle sorte que les rayons vecteurs $\Omega S$ et $\Omega O$ forment un angle $\alpha$. Dans cette configuration le capteur A est le premier touché par l'onde acoustique provenant de S puis le capteur B est second touché. La différence de temps d'arrivée est :

$$\Delta t = (BS - AS)/C$$

où AS et BS sont des arcs de section qui s'expriment facilement en fonction de l'angle qui les soustend :

2

$$AS = (\pi/3 - \alpha)R$$

où $\alpha$ est l'angle entre les vecteurs $\Omega S$ et $\Omega O$ et où R est le rayon de la section. Pour une section non circulaire mais analytiquement représentable, la longueur (AS) est alors une intégrale curviligne.

$$\text{Enfin : } BS = ((\pi/3) + \alpha)R$$

$$\text{D'où : } \Delta t = (2R/C)\alpha$$

Il est connu des générateurs sinusoïdaux, à fréquence réglable, à phase initiale commandable et à niveau de tension de sortie réglable. Avec deux générateurs sinusoïdaux à même fréquence, déphasés de $\pi/2$ l'un par rapport à l'autre et connecté chacun à l'une ou l'autre des paires de plaques 3, 4, on parvient ainsi classiquement à réaliser un cercle. Le rayon du cercle est fixé par la tension $V_0$ maximum appliquée aux plaques. Au cours du temps on appliquera donc :

$$V_{x1} = V_0 \cos \omega t$$

à la paire de plaques 3 et :

$$V_{y1} = V_0 \sin \omega t$$

à la paire de plaques 4, $V_0$ représentant le rayon r du cercle tracé sur l'écran 5.

En fonctionnement normal, l'oscilloscope utilisé dans l'invention n'est excité que quand une impulsion acoustique est reçue par un premier capteur A, B ou C. La détection du caractère « premier reçu » déclenche le positionnement des deux faisceaux à $\pi/3$ de part et d'autre des images A', B' ou C' des positions des capteurs A, B ou C. Dans l'exemple décrit figure 1a et 1b, au point A de la section correspond le point A' sur l'oscilloscope. Les faisceaux sont positionnés en O' et O'' de part et d'autre de A capteur premier atteint.

En effet, la détection de A premier capteur atteint indique clairement que la source acoustique S, une fissure par exemple, est située dans le tiers de la section, symétriquement réparti de part et d'autre de A.

Le déclenchement de l'oscilloscope comporte donc deux opérations successives très rapprochées :
— positionnement des deux faisceaux de part et d'autre de l'image du capteur premier atteint,
— validation des sorties des divers générateurs sinusoïdaux.

Une caractéristique remarquable de l'invention est que les faisceaux balaient la section en passant d'abord par l'image du capteur premier atteint. Ils tournent donc en sens inverse l'un de l'autre.

A la figure 2, on remarque deux paires de plaques 30, 40 relatives au second faisceau d'électrons. Ces deux paires peuvent ne pas exister physiquement mais exister dans le temps par commutation des plaques 3, 4 sur les deux faisceaux distincts. A la paire de plaques 4, de déviation verticale, on associe le générateur sinusoïdal 6 dont la tension de sortie en fonction du temps t est :

$$V_{x1} = V_0 \sin (\omega t + P_{x1})$$

De même un générateur 7 analogue est relié à la paire de plaques 40 qui reçoit :

$$V_{x2} = V_0 \sin (\omega t + P_{x2})$$

Pour les plaques de déviation horizontale 34 et 30 on a :

$$V_{y1} = \quad V_0 \cos (\omega t + P_{y1}) \text{ fourni par le générateur}$$

$$V_{y2} = -V_0 \cos (\omega t + P_{y2}) \text{ fourni par le générateur}$$

Le facteur $\omega$ est la pulsation ou la vitesse de rotation de l'impact du faisceau sur l'écran 5.

On remarque aussi que les faisceaux tournent en sens contraire l'un de l'autre. Cette particularité de l'invention permet d'obtenir un balayage du point S source acoustique beaucoup plus rapide.

Soit r le rayon du cercle décrit par chacun des faisceaux, en fonction de la valeur $V_0$. Sur la figure 1b, on remarque que le faisceau parti de O', après un déplacement angulaire $\alpha$ atteint le point S' image du point S source acoustique. Ce point S' est donc atteint par le premier faisceau au bout d'un temps $\Delta t$ après son départ. Du point O' au point S', se déplaçant à une vitesse v, le faisceau aura parcouru une distance $O'S' = v \Delta t = r \cdot \alpha$.

De la valeur de $\Delta t$ précédemment calculée, on peut déduire :

$$v = (r\alpha/R \cdot 2\alpha) \cdot C = (r/R) (C/2)$$

Au facteur de réduction r/R près, dû au passage à une image réduite, la vitesse linéaire du spot est donc moitié moindre de celle du faisceau. La vitesse C peut être mesurée facilement en étalonnant le localisateur selon l'invention.

Les capteurs 22-24 sont suivis de moyens de mise en forme du signal reçu. Ils sont, chacun, relié à des chaînes d'amplification 220-240 qui délivrent respectivement des signaux A, B et C figurés à la figure 6 pour un signal A seul. Chacun des signaux A, B ou C est injecté à un comparateur 2 200-2 400, qui reçoit une tension continue comme 31 à la figure 6. Cette tension, fournie par exemple par un potentiomètre 25 alimenté entre une tension maximale 17 et la masse 18 de l'appareil selon l'invention, permet d'obtenir en sortie des signaux logiques EA, EB ou EC issus de A, B ou C comme il a été représenté par A seulement à la figure 6.

Les trois signaux EA, EB et EC sont injectés à une logique d'encodage de l'ordre d'arrivée 26, 27 qui permet de déterminer d'une part lequel des capteurs A, B ou C est le premier atteint par l'onde acoustique par le moyen d'un détecteur 26 du premier capteur atteint, d'autre part le second capteur atteint par le moyen d'un détecteur 27 du second capteur atteint, le premier atteint étant connu.

A ce niveau du localisateur de défauts acoustiques selon l'invention, la position de toute source acoustique est connue dans des régions, limitées par les capteurs et de part et d'autre de chacun d'eux, de longueur angulaire π/3 sur la section circulaire. Au cours d'une émission acoustique, seul un des signaux de sortie S1A, S1B, S1C du détecteur 26 est au niveau actif pour indiquer lequel du capteur A, B ou C a été atteint le premier. De même un seul des signaux de sortie du détecteur 27 est au niveau actif.

D'autre part, toujours à la figure 2, ont été représentés sur une vue schématique éclatée d'un oscilloscope à deux faisceaux, un écran 5 sur lequel a été dessiné un système d'axes orthogonaux x, y, un premier système de déviation 3, 4 et un second système de déviation 30, 40, ainsi qu'un wehnelt 1 et un wehnelt 2. L'ensemble 10 permet de créer physiquement de fins faisceaux d'électrons émis le long de l'axe représenté sans repère sur la figure 2.

Deux générateurs 6 et 8, reliés aux paires de plaques horizontales 3 et 30, délivrent une tension proportionnelle à cos ωt, tandis que les générateurs 7 et 9 reliés aux paires de plaques verticales 4 et 40 délivrent une tension proportionnelle à sin ωt comme il a été vu plus haut.

Chaque générateur 6-9 de tension alternative reçoit, en plus de ses polarisations non représentées, trois tensions continues de commande qui sont la commande en phase, la commande en pulsation et la commande en niveau de sortie. Cette dernière commande peut d'ailleurs être constituée directement par l'amplificateur à gain réglable placé à chaque borne de déviation d'un oscilloscope standard.

Dans l'exemple de réalisation décrit, où la section surveillée est un cercle, les quatre niveaux de sortie sont égaux et permettent de déterminer le rayon r de l'image de la section surveillée sur l'écran 5.

D'autre part, pour des images non circulaires, on peut adjoindre des commandes de niveau de sortie programmées, de façon à représenter, par deux faisceaux la parcourant en sens inverses, n'importe quelle courbe fermée, image d'une section connue mais quelconque de la structure. La vitesse de parcours des faisceaux est alors proportionnelle à la vitesse de propagation des ondes dans la structure.

Les commandes de pulsation des générateurs sont ici communes. Elles permettent de fixer en fonction du rayon r de l'image, du rayon R de la section et de la vitesse C des ondes acoustiques dans le milieu, la vitesse v linéaire de parcours des faisceaux issus des wehnelts 1 et 2 sur l'écran. Les tensions de commande de pulsation, ici identiques pour obtenir des cercles, sont fournies par un générateur de pulsation 16.

Le générateur de pulsation 16, qui peut dans d'autres exemples de réalisation être intégré aux générateurs de courbe 6-9, comporte un oscillateur pilote de fréquence réglable, un circuit d'adaptation aux générateurs de courbe 6-9 et un dispositif d'étalonnage automatique de la fréquence. Ce dispositif d'étalonnage, non représenté au dessin, permet d'utiliser une chaîne de réception acoustique comme récepteur d'ondes acoustiques de test émises par l'un quelconque des capteurs. Pour celà, les capteurs doivent être du type réversible comme par exemple des capteurs piézoélectriques. Ils doivent être connectés, pour au moins l'un d'entre eux, à un commutateur à deux positions. La première position connecte le capteur au dispositif d'étalonnage et la seconde position sur la chaîne de réception classique déjà décrite, correspondant à l'utilisation normale du localisateur.

Le dispositif d'étalonnage comporte aussi, un générateur d'impulsions de test. Ce dernier, une fois connecté au capteur-émetteur de test, émet une série d'impulsions électriques, que le capteur-émetteur transforme en onde acoustique de polarisation et caractéristiques prédéterminées en fonction de la structure et du type de défaut surveillé.

Un générateur de tension en rampe est synchronisé sur le générateur d'impulsions de test. Ce générateur de tension en rampe comporte un circuit de blocage du niveau de sortie excité par la réception d'une onde acoustique sur le capteur connecté en position écoute du test d'étalonnage des vitesses de propagation. La tension de sortie du générateur est alors fournie à une entrée de commande de pulsation des générateurs sinusoïdaux 6-9. Elle est proportionnelle,

— d'une part à la durée de parcours d'une onde acoustique entre deux capteurs ;
— d'autre part, leur distance étant connue, à la vitesse de propagation de l'onde acoustique dans la structure surveillée.

La commande en phase d'un générateur 6-9 permet d'ajouter un terme P à la phase instantanée. Ceci permet de placer un faisceau en n'importe quel point du cercle image fixée par la pulsation ω et le rayon r. Chaque terme P de phase doit être fourni à une paire de générateurs 6, 8 ou 7, 9. Soient P et P' les deux valeurs de phase. Les différentes tensions de sortie, dans l'exemple décrit seront alors :

$$V_{x1} = V_0 \cos (\omega t + P)$$
$$V_{y1} = V_0 \sin (\omega t + P)$$
faisceau issu du wehnelt 1,

$$V_{x2} = V_0 \cos (\omega t + P')$$
$$V_{y2} = - V_0 \sin (\omega t + P')$$
faisceau issu du wehnelt 2.

Les valeurs de P ou P' sont prédéterminées. En effet, on désire obtenir un positionnement des deux faisceaux à un angle de $\pi/3$ de part et d'autre du point image du capteur premier atteint. De cette remarque, on déduit que les différentes commandes en phase des générateurs 6-9, sont fournies par les signaux S1A, S1B et S1C qui sélectionnent deux valeurs P ou P' prises en couples qui sont :

| premier atteint | P | P' |
|---|---|---|
| A | O | $\frac{2\pi}{3}$ |
| C | $\frac{2\pi}{3}$ | $\frac{4\pi}{3}$ |
| B | $\frac{4\pi}{3}$ | O |

avec les hypothèses suivantes :
— le faisceau issu du wehnelt 1, est à l'instant initial déphasé de P, puis tourne dans le sens trigonométrique ;
— le faisceau issu du wehnelt 2, est à l'instant initial déphasé de P', puis tourne dans le sens anti trigonométrique ;
— les angles sont comptés à partir du rayon $\Omega'O'$ de la figure 1b ;
— les points A', B', C' sont dans l'ordre figuré sur cette figure 1b.
L'initialisation est réalisée instantanément aux temps de réponse des éléments près. Cette initialisation déclenche en même temps la rotation des faisceaux dès que la tension alternative apparaît en sortie des générateurs. L'ensemble de ces opérations est réalisé par le générateur de phase 20.

Un tel générateur doit, par commutation rapide, présenter deux tensions continues prises parmi trois connues chacune représentant une phase particulière de positionnement des faisceaux, au décodage des trois entrées S1. Tant qu'aucun des S1 n'est actif, aucune tension n'est délivrée par le générateur 20 de phase. Alors les déviations (3, 4 ; 30, 40) sont inopérantes, aucun des deux faisceaux n'est ni positionné ni en traçage.

Physiquement le générateur 20 de phase, comporte un commutateur dont le contact est placé de façon à connecter deux des tensions fournies par les présélections. Celles-ci peuvent comporter des sources de tension. Dans un exemple préféré de réalisation, chaque source peut être constituée d'un amplificateur dont le niveau de sortie en continu est étalonné. Chacun des amplificateurs reçoit l'un des signaux S1. Il est aussi connecté à un montage diviseur de tension qui délivre les deux tensions correspondantes aux phases initiales prédéterminées déjà décrites. Les amplificateurs peuvent comporter de simples transistors montés en commutation sur une alimentation continue qui, à une commande de leur base reliée à l'un des signaux S1, est connectée à un des montages diviseurs de tension décrit plus haut.

Le nombre des capteurs peut être augmenté dans le cas où la section surveillée est une courbe fermée avec changement de concavité.

On remarque aussi que la commande d'allumage des faisceaux est distincte de ce qui a été décrit ci-dessus. En effet, quand un faisceau physiquement composé d'électrons traversera l'espace inter plaques 3, 4 ou 30, 40, le champ électrique créé par les générateurs 6-9 le déviera vers un point précis de l'écran 5 à un instant donné. L'impact du flux d'électrons sur la matière constituant l'écran 5 crée une émission de lumière.

Dans le cas où le faisceau ne comprend pas d'électrons, c'est-à-dire pas assez d'électrons pour illuminer le point d'impact, les tensions appliquées aux plaques 3, 4, 30, 40 créent des conditions telles que ce faisceau virtuel parcourt un cercle non tracé réellement sur l'écran 5. Celui-ci ne s'illuminera qu'à la commande de Wehnelt 1 ou 2 et à partir du moment où ce dernier reçoit la commande.

Cette commande de Wehnelt est engendrée par un générateur de commande de Wehnelt 19 qui reçoit en entrée les signaux de sortie S2 du détecteur 27. Il sélectionne le wehnelt à illuminer et donne l'ordre d'illumination quand le second capteur est activé. La durée d'illumination est de T secondes, ce temps étant très petit devant la période de parcours de l'image de la section. De plus, ce générateur peut comporter une temporisation qui à chaque période qui suit la détection de la source acoustique S, redonne l'ordre d'illumination. La valeur du temps T d'illumination détermine la taille de la trace du point image S' de la source acoustique S. L'écran 5 peut aussi être du type à mémoire qui garde la trace de l'impact.

A la figure 5, a été représenté un générateur de commande de wehnelt 19 simplifié. Les signaux de

5

sortie S2 du détecteur 27 du capteur second touché sont découplés par deux. Ainsi il y a deux signaux S2 de sortie indiquant si B est second capteur touché selon que A ou C a été le premier capteur touché. Ceci permet d'éviter l'utilisation des signaux S1 dans un souci de simplification. Le générateur de commande 19 comporte deux portes logiques OU 191 et 193 dont les sorties commandent deux générateurs d'impulsions 192 et 194 dont les sorties W1 ou W2 attaquent l'un ou l'autre des wehnelts concernés.

A la figure 3 a été représenté un exemple particulier de réalisation de détecteur 26 du capteur premier atteint. Ce détecteur 26 reçoit en entrée les signaux logiques EA, EB et EC. Chacun d'eux est placé à la commande d'un monostable (respectivement 261, 262 et 263) qui allonge le premier signal reçu de telle sorte que le niveau de sortie ne retombe au niveau passif qu'après que le dernier signal EA, EB ou EC ait été reçu. Cette temporisation aura avantageusement comme durée la valeur d'une période d'excitation, c'est-à-dire aussi le temps qu'un des faisceaux met à parcourir toute l'image de la section. La temporisation est réalisée par un ensemble 264 qui reçoit un signal par exemple du circuit de calcul de la pulsation des générateurs 6-9 précédents.

Chaque sortie normale Q des monostables délivre ainsi un signal, respectivement à l'entrée GLR (comme 28 du monostable 261), dite entrée de remise au niveau passif, de chacun des deux autres monostables. Ainsi S1A, issu du monostable 261, est appliqué aux entrées GLR des deux autres monostables 262 et 263. Ceci a pour effet de maintenir les sorties Q de 262 et 263 au niveau passif quoiqu'il arrive sur les entrées EB et EC si EA est au niveau haut. Ainsi un seul des signaux S1 peut être au niveau actif et il désigne bien le capteur premier atteint.

Les diodes comme 265 et 266 sont destinées à être des dispositifs anti retour pour éviter de déclencher les entrées CLR intempestivement. De plus, à la sortie de 26 on dispose aussi des signaux $\overline{S1}$ dit signaux complémentés de S1, qui sont $\overline{S1A}$, $\overline{S1B}$ et $\overline{S1C}$.

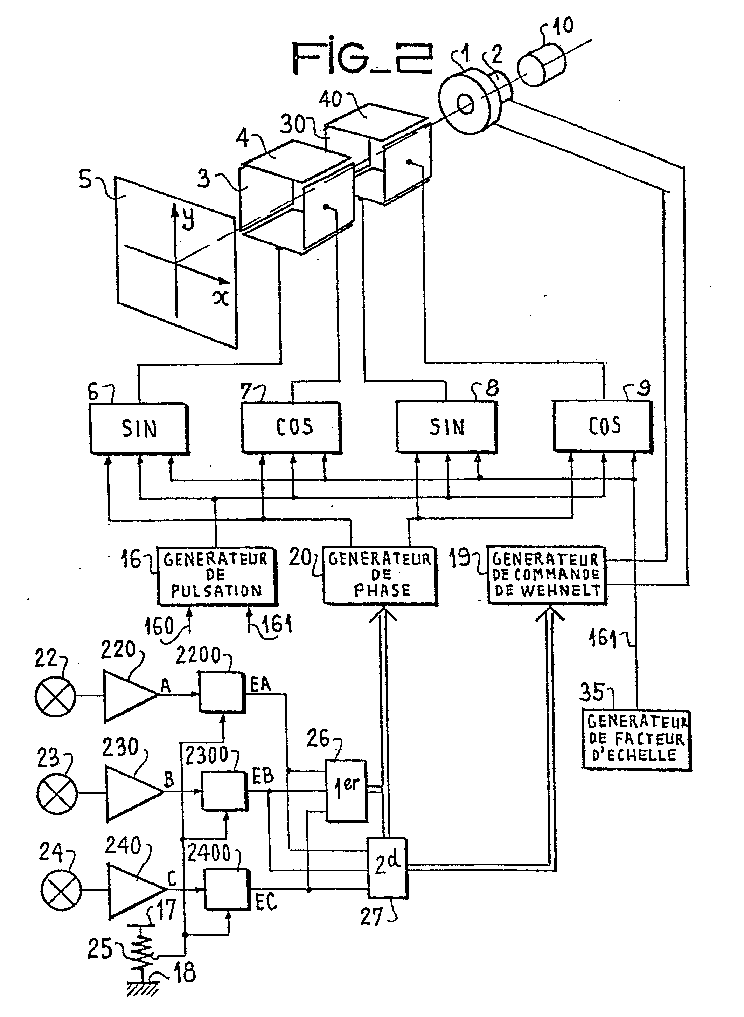

La figure 4 représente un détecteur 27 du second capteur atteint par l'onde acoustique. Ce détecteur comporte trois bascules dont l'état de sortie de la borne de sortie Q change à toute transition à son entrée. Le détecteur 27 comporte trois montages identiques. Chaque montage comporte deux entrées comme EB et EC qui sont composées dans un OU logique 271. L'état de sortie est un état actif dès qu'il existe au moins un état actif à l'entrée. La sortie du « OU » 271 est appliquée à l'entrée de la bascule 272.

La bascule 272 reçoit sur son entrée de réinitialisation le signal $\overline{S1A}$ qui est actif tant que le capteur A ne détecte aucun signal. Dès que A détecte un signal acoustique, $\overline{S1A}$ passe au niveau inactif, l'entrée CLR de réinitialisation est neutre, la bascule 272 est alors validée et fonctionne normalement.

On utilise ensuite sa sortie complémentaire $\overline{Q}$ qui est à l'état inactif entre deux états actifs appliqués à l'entrée. Cette sortie $\overline{Q}$ est reliée à deux ET logiques 273, 274 qui sont composés avec EB et EC pour donner S2B/A et S2C/A deux signaux de sortie dont les états s'excluent c'est-à-dire aussi qui sont le complément logique l'un de l'autre.

On obtient ainsi six signaux S2 qui sont : S2B/A, S2C/A, S2A/B, S2C/B, S2A/C, S2B/C, S2 désignant un signal de détection « capteur second atteint », la première lettre suivante désignant le capteur en question et la seconde lettre séparée par une barre le capteur premier atteint. Un seul de ces signaux peut être au niveau actif à la fois.

A chaque bascule du détecteur on applique aussi sur son entrée CLR, déjà écrite, le complément $\overline{S1}$ du signal de sortie correspondant au premier capteur atteint. Cette disposition permet de ne valider les bascules qu'une par une et exclusivement celle concernée par le signal S1 correspondant. Un exemple de fonctionnement permettra de mieux saisir cette particularité de l'invention.

Le localisateur décrit figure 2 comporte aussi un générateur 35 du facteur d'échelle. Ce dernier permet d'élaborer le signal 161 destiné au générateur de pulsation 16 et le niveau de sortie $V_0$ des générateurs 6-9. Il comporte un potentiomètre de réglage du rayon R de la section du tube et de r du cercle sur l'écran. En fait, il s'agit plus simplement d'une commande de gain, réglable manuellement, envoyée sur chaque générateur 6-9.

Un exemple de fonctionnement du localisateur va maintenant être décrit. On suppose que, physiquement, la source acoustique S est placée comme sur la figure 1a. A la figure 6, on lit de bas en haut les différents chronogrammes qui indiquent la réponse en temps réel du localisateur. Les capteurs A, B ou C reçoivent un signal dit signal d'émission acoustique. On a représenté seulement le signal A émanant du capteur A. Le signal peut subir différents traitements. En particulier, dans l'exemple ici décrit, le signal A est comparé à un niveau de référence 31. La comparaison de ces deux signaux, réalisée par les moyens décrits plus haut, fournit un signal EA de type logique. Il peut exiger une mise en forme par exemple avec un monostable temporisé qui déclenche sur le front montant de l'onde acoustique A et retombe au bout d'une durée déterminée par la constante de temps du monostable.

Dans le cas de la figure 1a, les capteurs reçoivent l'onde acoustique dans l'ordre A, B puis C. On a représenté les signaux logiques EA, EB et EC. La présente invention permet aussi de réaliser un masquage des ondes acoustiques qui excitent les capteurs après la première excitation de chacun d'eux. En effet, un capteur donné reçoit une première impulsion provenant du parcours le plus direct qui existe entre la source d'émission et lui, puis un certain nombre d'autres dus à des émissions secondaires ou à des trajets plus longs. La discrimination est réalisée ici par la comparaison du signal reçu à un niveau donné suffisamment élevé pour que tous les signaux reçus après la première excitation, ne déclenchent pas le localisateur.

Le détecteur 26 du premier capteur atteint est attaqué d'abord par EA. Le monostable 261 est donc le premier à basculer au niveau actif. Sa borne de sortie délivre le signal S1A qui ne retombe au niveau passif qu'au bout d'un temps tel que toutes les impulsions à masquer aient lieu pendant que S1A est au niveau actif. En effet, ce signal, comme il est visible figure 3 est appliqué aux entrées CLR des deux autres monostables 262 et 263 du détecteur 26, forçant leurs deux entrées signal à être inopérantes. On remarque ainsi que tant que S1A est au niveau actif auquel il est maintenu par la temporisation T du monostable, tout nouveau signal EA est aussi inopérant.

A ce niveau, le localisateur selon l'invention connaît le premier capteur atteint. Le signal S1A est alors appliqué au générateur de phase 20 ce qui a pour effet de positionner les deux faisceaux et de lancer le traçage des cercles par lesdits faisceaux. La condition de fonctionnement à ce moment est que le générateur de pulsation 16 ait reçu l'information de vitesse de l'onde dans la section.

En même temps, sur la figure 6, on remarque que les signaux $\overline{S1}$ compléments des signaux S1 bloquent les bascules du détecteur 27 sauf la première 272. Celle-ci reçoit les deux signaux EB et EC successivement sur son entrée par l'intermédiaire de la porte OU 271. La bascule 272 fournit un signal $\overline{Q}$ et son complément $\overline{Q}$ qui remonte au niveau actif après l'apparition de EC. Ceci a pour effet de masquer EC à la porte ET 274 et par contre de valider la porte ET 273 qui fournit un signal S2B/A identique, aux temps de montée des portes près, au signal EB.

Le signal S2B/A est alors fourni au générateur de commande de wehnelt 19 dont la porte OU 191, seule à recevoir un niveau actif à S2B, déclenche un générateur d'impulsion 192 qui fournit une impulsion W1, celle-ci illuminant le faisceau tournant dans le sens trigonométrique à son passage au point S′ image de S sur l'oscilloscope. L'écran 5 étant muni par exemple d'un dispositif à mémoire d'image, un observateur pourra situer la position d'une source acoustique accidentelle.

D'autres variantes de réalisation selon l'invention peuvent être proposées. En particulier, le déclenchement des générateurs de courbe 6-9 peut être réalisé directement par des signaux EA, EB, EC, le premier arrivant aveuglant les générateurs 6-9 pour les suivants.

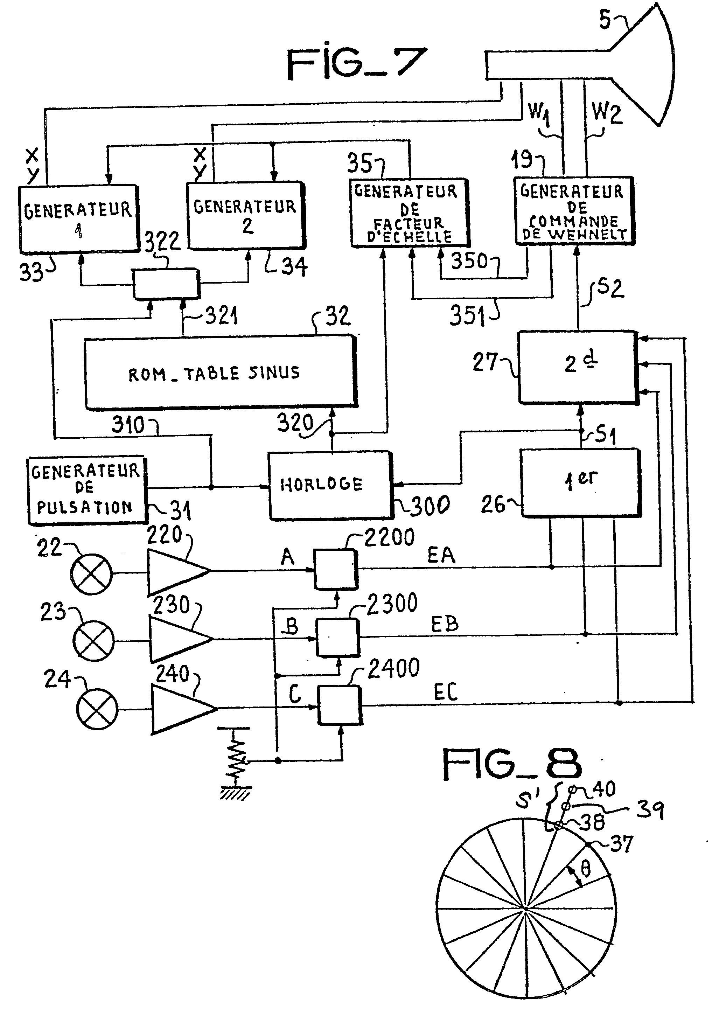

Une autre variante possible utilise des circuits numériques pour toute la commande. A cet effet, on a représenté figure 7 un schéma d'une telle variante. Elle comprend comme précédemment, trois capteurs 22-24, les détecteurs 26, 27 de la logique d'encodage de l'ordre d'arrivée, le générateur de commande de wehnelt 19 et l'oscilloscope bifaisceau 36. Il comporte aussi un générateur de pulsation 31, une horloge 30, des générateurs de courbe X et Y 33, 34, un générateur 35 de facteur d'échelle. Enfin, une mémoire programmée de type ROM 32 par exemple constitue une commande des générateurs de courbe. Dans le cas d'une section circulaire la mémoire ROM 32 est chargée par une table des sinus.

En contrôle de pièces sans failles ni fissures, les capteurs 22-24 ne reçoivent aucune excitation due à des émissions acoustiques critiques. L'écran 5 de l'oscilloscope 36 reste sans trace. Le générateur de pulsation 31, convenablement initialisé comme on l'a vu plus haut, pilote une horloge 300 ; cette horloge est en fait un générateur d'adresses et d'ordres de lecture de la mémoire ROM 32. Autrement dit, l'horloge 300, à l'instant t, pilotée par le générateur 31 de pulsation $\omega$, fournit les phases instantanées ou positions angulaires $\omega t$ d'un balayage trigonométrique du cercle image de la section du tube contrôlé. Ainsi sur la ligne de service 320 d'entrée de la ROM 32, les ordres de lecture sont envoyés avec les adresses qui correspondent aux positions angulaires du faisceau issu du wehnelt W1.

Pour engendrer un parcours en sens anti trigonométrique afin de piloter le faisceau issu du wehnelt W2, il suffit par exemple de lire en alternance l'adresse n, n étant fournie par l'horloge 300, et l'adresse N − n, N étant la capacité de la table ROM 32. N est d'ailleurs fixé par la résolution de l'image que l'on désire obtenir sur l'écran 5. En effet avec N = 360 on peut balayer 360 positions angulaires pour un cercle, donc réaliser une résolution de $\theta = 1°$ d'arc sur l'image de la section.

La ligne de service 321 de sortie de la ROM 32, va donc fournir la valeur sin $\omega t$ = sin (N − n)$\theta$ pour le parcours dans le sens anti trigonométrique,. et ce au cours d'une période de temps qui est 2 $\pi$/N$\omega$ chacune des valeurs sin n$\theta$ et sin (N − n)$\theta$ étant fournie sur la même ligne de service 321 pendant une durée moitié $\pi$/N$\omega$. Un commutateur 322, synchronisé sur l'horloge 300, permet de réaliser l'aiguillage des deux valeurs courantes sin n$\theta$ et sin (N − n)$\theta$, la première sur le générateur n° 1 repéré 33 et la seconde sur le générateur n° 2 repéré 34. Ces générateurs 33, 34 permettent, à partir des valeurs sin n$\theta$ et sin (N − n)$\theta$, d'obtenir les différentes tensions de commande des plaques de déviation 3,30 et 4,40 comme on l'a vu plus haut.

Le diamètre du cercle sur l'écran est réglé par le générateur de facteur d'échelle 35. Ce dernier donne à sa sortie une tension de commande du gain de l'amplification des générateurs 33, 34. Cette tension de commande est d'ailleurs réglable à volonté par l'observateur en fonction des tailles du tube contrôlé et de l'image désirée. La tension de commande de gain est aussi fournie au générateur de pulsation 31 pour élaborer la pulsation des faisceaux.

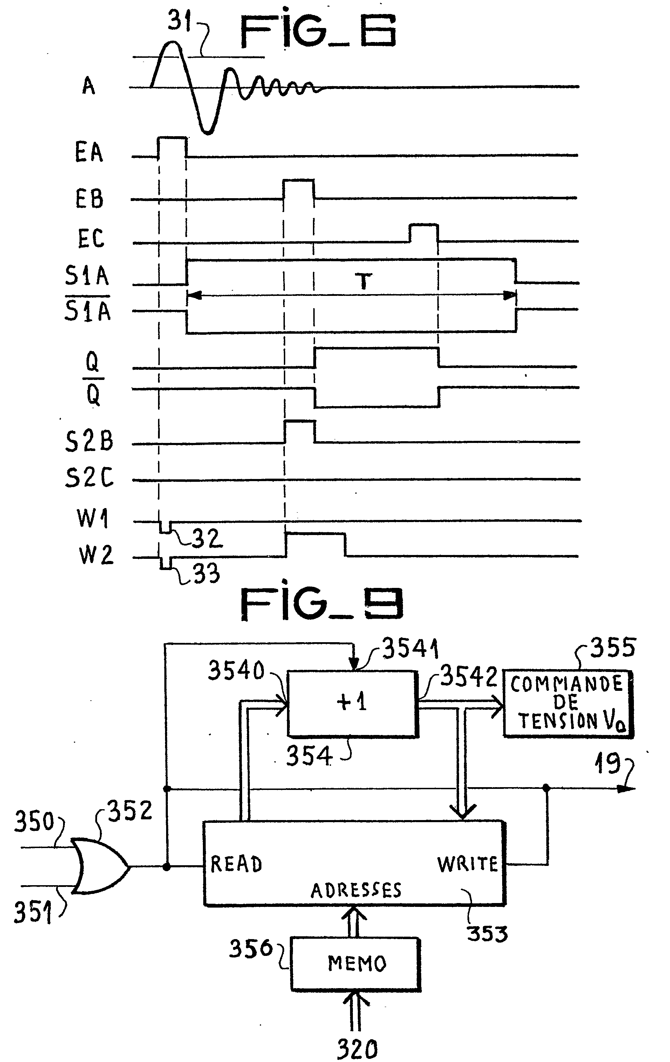

A la figure 8, le cercle image est représenté selon le mode numérique proposé dans cette variante de l'invention. Il est donc composé de suite de points comme 37 à une distance fixe du centre de l'écran 5 avec un écart angulaire ou pas angulaire $\theta$.

Quand une fissure se crée, une source acoustique est donc constituée dont on désire connaître la position. La logique d'encodage constituée des détecteurs 26, 27 fonctionne comme il a déjà été décrit dans la demande. Les signaux S1 permettent de réinitialiser l'horloge 300 sur des valeurs correspondantes aux positions à $\pi$/3 de part et d'autres des points images de chacun des capteurs. Ainsi le signal S1A étant actif l'horloge 300 est initialisée sur la valeur n$\theta$ = 0° dans l'hypothèse de position de l'axe polaire

7

selon « O » sur la figure 1b. Le faisceau W1 est donc positionné sur le point O' comme dans le premier exemple de réalisation décrit.

La valeur $n\theta = 0$ correspond donc à la première adresse de la ROM 32. Elle est présente à la sortie pendant $\pi/\omega$ secondes, puis une nouvelle adresse d'initialisation du second faisceau est fournie. Cette adresse est correspondante à $p\theta = 120°$ du point O" de la figure 1b, ce qui permet bien de positionner le second faisceau sur O".

Les adresses de la ROM 32 sont alors incrémentées de 1 unité à chaque première demi-période pour parcourir le cercle dans le sens trigonométrique et diminuées de 1 unité à l'autre demi-période. Ces deux opérations sont réalisées modulo N près, et pour les quatre quadrants du cercle trigonométrique.

Quand l'un des signaux S2 passe au niveau actif pour la première fois, le générateur 19 de commande des wehnelts sélectionne l'un ou l'autre des wehnelts W1 ou W2. Les deux fils 350 et 351 sont connectés aux sorties des portes OU 191 et 193.

Le générateur 35 de facteur d'échelle comporte, représentés à la figure 9, une mémoire RAM 353, une mémoire temporaire 354, un additionneur 355 et la commande de tension $V_0356$. Ce générateur a pour rôle, en fonctionnement normal, de donner le facteur d'échelle de réduction de l'imagerie. En fonctionnement avec apparition de fissures, il doit en plus réaliser une incrémentation par sauts sur le rayon du point image S' de la figure 8, de telle sorte que le nombre d'émissions acoustiques émanant de la même source soit comptabilisé. Dans le cas de la figure 9, on remarque que le point S' comporte trois points illuminés 38, 39 et 40. Ils correspondent à trois réponses du détecteur selon l'invention. Ceci permet de noter l'importance d'une fissure en formation.

A la figure 9, a été représenté un mode particulier de réalisation de générateur 35 de facteur d'échelle. Chaque point du cercle image sur l'écran 5 a une adresse qui correspond à une position numérique de l'un ou l'autre des faisceaux W1 ou W2, disponible sur la ligne 320. Cette ligne 320 apporte les adresses de chacun de ces points, la RAM 353 représentant ainsi une liste de tous les points du cercle. Son contenu est le nombre d'échos, d'impulsions sonores recueillies par le dispositif selon l'invention pour chaque point du cercle. Quand une adresse parvient au générateur 35 sur la ligne 320, elle est mémorisée un court instant dans une mémoire tampon à une seule adresse 354. Elle sélectionne une position déterminée de la RAM. Si la fonction W1.W2, réalisée par la porte OU 352 est active, la mémoire RAM 353 est lue à son adresse sélectionnée. Son contenu est envoyé par D OUT à l'entrée 3540 d'un incrémenteur de une unité 354.

Le résultat de l'addition est transmis par la sortie 3541 de l'incrémenteur à DIN de la mémoire 353 d'une part, à la commande du générateur de rayon dit circuit de commande en tension $V_0355$ d'autre part. Ce dernier qui, à vide, détermine le rayon r de l'image sur l'écran 5 et le facteur d'échelle r/2R, détermine le tracé par exemple d'autant de points extérieurs au cercle image de la section, le long du rayon du point adressé, que le contenu de la mémoire RAM 353 l'indique. Ainsi, à la figure 8, si l'adresse numéro 1 est attribuée au point image 37, à l'adresse numéro 2, où ont été représentés 3 échos successifs 38-40, la mémoire RAM 353 contiendra la valeur 3. Cette valeur indique qu'à l'instant où l'on visualise la section, le point d'adresse 2 a envoyé trois impulsions acoustiques visualisées en 38-40.

Le générateur de commande de wehnelt 19, qui a sélectionné W1 ou W2, reçoit du générateur 35, l'ordre d'inscription du dernier point. Dans l'exemple de la figure 8, ce générateur 19 reçoit l'ordre d'inscription du point 40 à l'issue du calcul réalisé par l'incrémenteur 354.

D'autres modes de réalisation peuvent être proposés dans le cadre de l'invention. En particulier, il est possible d'exécuter les opérations décrites par un système léger à microprocesseur bâti avec la ROM 32 et la RAM 353. La forme des circuits décrits peut changer avec le choix de la section. Par exemple, pour une charpente métallique constituée de triangles fermés, un triangle jouant le rôle de section examinée, le dispositif selon l'invention devra comprendre un générateur de triangle graphique sur l'écran d'un oscilloscope bicourbe.

La surveillance est réalisée par au moins trois capteurs par section. La section est surveillée grâce à un dispositif qui permet de ne prendre en compte que les émissions acoustiques dans la section, par discrimination spatiale. Des capteurs de garde sont placés sur la structure, de part et d'autre de la section surveillée. L'épaisseur de cette dernière peut ainsi être réglée.

**Revendications**

1. Localisateur d'émission acoustique de défauts d'une structure dans laquelle les ondes acoustiques parcourent des chemins fermés, caractérisé en ce que les chemins sont représentés sur des moyens de visualisation (3, 4, 5, 30, 40) par des moyens d'inscription (1, 2, 10), et en ce que le localisateur comporte des capteurs acoustiques (22-24) et des moyens de mise en forme des signaux reçus, une logique d'encodage (26-27) de l'ordre d'arrivée des signaux qui active d'une part des moyens de commande (16, 20, 35) des moyens de visualisation et des moyens de commande (19) des moyens d'inscription, une trace du défaut étant inscrite sur l'image du chemin représenté sur les moyens de visualisation à la détection dudit défaut.

2. Localisateur selon la revendication 1, caractérisé en ce qu'il comporte au moins trois capteurs (22-24), uniformément répartis sur la surface de la structure surveillée, reliés aux moyens de mise en forme des signaux reçus et en ce que la logique d'encodage de l'ordre d'arrivée des signaux après remise en forme comporte un détecteur (26) du capteur premier atteint, ce détecteur activant les moyens de commande (16, 20, 35) des moyens de visualisation, et un détecteur (27) du capteur second atteint qui active les moyens de commande (19) des moyens d'inscription.

3. Localisateur selon la revendication 2, caractérisé en ce que les moyens de visualisation comportent un tube cathodique à écran (5) avec deux faisceaux commandés par des moyens de déviation (3, 4) ou (30, 40) et deux générateurs de courbe identiques (6-9), le premier (6, 7) relié au premier moyen de déviation (3, 4) et le second (8, 9) au second moyen de déviation (30, 40) et en ce que les générateurs de courbe (6-9) sont commandés par un générateur de pulsation (16), un générateur de phase (20) et un générateur de facteur d'échelle (35) constituant les moyens de commande (16, 20, 35) des moyens de visualisation (3, 4, 5, 30, 40).

4. Localisateur selon la revendication 3, caractérisé en ce que les moyens d'inscription des moyens de visualisation comportent des commandes de wehnelt (W1, W2) et en ce que les moyens de commande des moyens d'inscription comportent un générateur (19) de commande de wehnelt.

5. Localisateur selon la revendication 2, caractérisé en ce que le détecteur (26) du capteur premier atteint comporte trois bascules (261-263) de type monostable à constante de temps ajustable, chacune des entrées (EA-EC) recevant le signal reçu de l'un des capteurs et chacune des entrées d'initialisation (267) recevant un signal de blocage par un dispositif anti retour (265, 266), le détecteur (26) fournissant à chaque réception un seul signal (S1A-S1C) et son complément logique ($\overline{S1A}$-$\overline{S1C}$) représentatifs du capteur premier atteint.

6. Localisateur selon la revendication 5, caractérisé en ce que le dispositif anti retour commandant l'entrée d'initialisation d'une quelconque des bascules (261-263) comprend deux diodes (265, 266) reliées chacune à la sortie (S1A, S1C) de l'une des deux autres bascules.

7. Localisateur selon la revendication 5, caractérisé en ce que le détecteur (27) du capteur second atteint comporte trois bascules (272) de type monostable chacune d'entre elles recevant :
— par son entrée de signal le signal produit d'une porte OU (271) de deux des signaux (EA-EC) reçus ;
— par son entrée de réinitialisation (CLR) le signal ($\overline{S1A}$-$\overline{S1C}$) correspondant à la sortie complémentée de la bascule (261-263) relative au signal (EA-EC) restant ;
— et la sortie complémentée ($\overline{Q}$) étant reliée à deux portes ET (273, 274) réalisant chacune la somme de l'un des deux signaux (EA-EC) composés à l'entrée de la bascule (272), les sorties du détecteur (27) étant des combinaisons de signaux (S2A-S2C) pris deux à deux.

8. Localisateur selon la revendication 3, caractérisé en ce que les générateurs (6-9) de courbes identiques sont deux générateurs de cercle concentrique, chacun comportant un générateur de cercle concentrique, chacun comportant un générateur de tension sinusoïdale (6 ou 8) et un générateur de tension cosinusoïdale (7 ou 9).

9. Localisateur selon la revendication 3 ou 8, caractérisé en ce que le générateur de pulsation (16) comporte aussi un dispositif d'étalonnage de la vitesse de propagation des ondes acoustiques dans la structure en circuit fermé.

10. Localisateur selon la revendication 9, caractérisé en ce que le dispositif d'étalonnage comporte un potentiomètre qui, réglé par l'utilisateur, fournit une tension analogique proportionnelle à la vitesse de propagation des ondes acoustiques.

11. Localisateur selon la revendication 9, caractérisé en ce que le dispositif d'étalonnage comporte :
— un commutateur qui place l'un des capteurs (22-24) en mode d'émission ;
— un générateur d'impulsions connecté à ce capteur ;
— un générateur de tension en rampe synchrone des impulsions de test ;
— un détecteur de l'écho reçu par l'un des capteurs qui bloque la tension en rampe, un signal étant reçu la tension de sortie du générateur de rampe étant alors indicatrice du temps de propagation de l'onde acoustique entre deux capteurs et de la vitesse de propagation de l'onde acoustique, commande une entrée de pulsation de chacun des générateurs de cercle (6-9).

12. Localisateur selon la revendication 5, caractérisé en ce que le générateur de phase (20) comporte des présélections de la phase initiale des générateurs de courbe (6-9) et un commutateur qui les sélectionne en fonction des signaux (S1) fournis par le détecteur (26) du capteur premier atteint.

13. localisateur selon la revendication 12, caractérisé en ce que les présélections comportent des sources de tension de valeurs prédéterminées correspondant chacune à une position initiale de chacun des deux faisceaux de part et d'autre de l'image (A') sur l'écran (5) du capteur (A) premier atteint.

14. Localisateur selon la revendication 12, caractérisé en ce que les sources de tension comportent des transistors polarisés en commutation qui délivrent à une commande sur leur base une tension prédéterminée.

15. Localisateur selon la revendication 13, caractérisé en ce que les sources de tension comportent des résistances montées en point diviseur de rapports prédéterminés.

16. Localisateur selon la revendication 5, caractérisé en ce que le générateur de facteur d'échelle (35) comporte une source de tension qui commande le niveau de sortie des générateurs de courbe (6-9).

17. Localisateur selon la revendication 16, caractérisé en ce que la source de tension du générateur de facteur d'échelle est ajustée par un potentiomètre indicateur des dimensions respectives de la structure surveillée et de son image sur l'écran (5).

9

18. Localisateur selon la revendication 4 ou 7, caractérisé en ce que le générateur de commande (19) du wehnelt comporte :

— une première porte OU (191) qui réalise le produit des signaux (S2) correspondant au capteur second atteint situé après le capteur premier atteint dans le sens trigonométrique, et connecté à un premier amplificateur (192) qui produit une impulsion (W1) d'illumination de durée prédéterminée ;

— une seconde porte OU (193) qui réalise le produit des signaux (S2) correspondant au capteur second atteint situé après le capteur premier atteint dans le sens trigonométrique et un second amplificateur (194) qui produit une impulsion (W2) d'illumination de durée prédéterminée.

19. Localisateur selon la revendication 2, caractérisé en ce que les moyens de commandes des moyens de visualisation comportent :

— un générateur de pulsation (31) ;

— une horloge (30) qui s'incrémente d'une unité à chaque impulsion reçue du générateur de pulsation (30) ;

— une mémoire morte ROM (32) dont chaque adresse en relation avec une position géométrique sur le chemin des ondes contient une valeur numérique relative à la position d'un point de l'image de la structure sur l'écran (5) ;

— un commutateur (322) commandé par la sortie (310) du générateur de pulsation (31) à deux sorties ;

— deux générateurs (33, 34) de courbe identique qui reçoivent à travers le commutateur (322) les valeurs numériques en mémoire (32) qui leur convient pour fournir des tensions de commande convenables aux moyens de déviation (3, 4, 30, 40) des moyens de visualisation.

20. Localisateur selon la revendication 18, caractérisé en ce que la mémoire ROM (32) est à chaque période de l'horloge (30) incrémentée, l'adresse lue correspondant au faisceau tournant dans le sens trigonométrique, et décrémentée, l'adresse lue correspondant au faisceau tournant dans le sens trigonométrique.

21. Localisateur selon l'une des revendications 18 ou 19 caractérisé en ce que le générateur (35) de facteur d'échelle comporte :

— une mémoire RAM (353) comportant une capacité au moins égale à celle de la mémoire ROM (32) ;

— une mémoire auxiliaire (354) ;

— un compteur (355) ;

— un amplificateur (356) à gain programmable de commande de tension dont la sortie est reliée aux générateurs de courbe (6-9).

22. Localisateur selon la revendication 20, caractérisé en ce que la mémoire (354) est un registre qui contient l'adresse du point balayé et dont la sortie, immédiatement disponible, est connectée à l'entrée adresses de la mémoire RAM (353).

23. Localisateur selon la revendication 20 ou 21, caractérisé en ce que la mémoire RAM (353) et inscriptible seulement si la fonction produit W1-W2 de commande des wehnelts est au niveau actif grâce à une porte « OU » (352) qui reçoit W1 sur son entrée (350) et W2 sur son entrée (351) et dont la sortie est reliée aux bornes de lecture et d'écriture (READ, WRITE) de la mémoire (353).

24. Localisateur selon la revendication 20 ou 22, caractérisé en ce que le compteur (355) reçoit le contenu d'une cellule mémoire (353) adressée par la mémoire (354), l'incrémente d'une unité et en ce que la valeur de sortie du compteur (355) est d'une part réécrite à la même adresse et d'autre part fournie comme commande de l'amplificateur (356).

25. Localisateur selon l'une quelconque des revendications précédentes, caractérisé en ce que la structure localisée est un cordon de soudure en « V » de section circulaire entre deux tubes cylindriques raboutés.

**Claims**

1. Locator of acoustic emission from faults in a structure in which the sound waves travel in closed paths, characterised in that the paths are represented on the display means (3, 4, 5, 30, 40) by writing means (1, 2, 10), and in that the locator includes acoustic sensors (22-24) and means of shaping the received signals, logic (26-27) for encoding the order of arrival of the signals which activates on the one hand means of control (16, 20, 35) of the display means and means of control (19) of the writing means, a plot of the fault being drawn on the image of the path represented on the display means at the detection of the said fault.

2. Locator according to Claim 1, characterised in that it includes at least three sensors (22-24), uniformly distributed over the surface of the monitored structured, connected to the means of shaping the received signals and in that the logic for encoding the order of arrival of the signals after reshaping includes a detector (26) of the first sensor reached, this detector activating the means of control (16, 20, 35) of the display means, and a detector (27) of the second sensor reached which activates the means of control (19) of the writing means.

3. Locator according to Claim 2, characterised in that the display means include a cathode ray tube with screen (5) with two beams controlled by deflection means (3, 4) or (30, 40) and two identical curve generators (6-9), the first (6, 7) connected to the first means of deflection (3, 4) and the second (8, 9) to the second means of deflection (30, 40), and in that the curve generators (6-9) are controlled by a pulse generator (16), a phase generator (20) and a scale factor generator (35) forming the means of control (16, 20, 35) of the display means (3, 4, 5, 30, 40).

4. Locator according to Claim 3, characterised in that the writing means of the display means include Wehnelt controls (W1, W2) and in that the means of control of the writing means include a Wehnelt control generator (19).

5. Locator according to Claim 2, characterised in that the detector (26) of the first sensor reached includes three monostable flip-flops (261-263) with adjustable time constants, each of the inputs (EA-EC) receiving the signal received from one of the sensors and each of the initialisation inputs (267) receiving an inhibit signal via a non-return device (265, 266), the detector (26) providing on each reception a single signal (S1A-S1C) and its logical complement ($\overline{S1A}$-$\overline{S1C}$) representing the first sensor reached.

6. Locator according to Claim 5, characterised in that the non-return device controlling the initialisation input of any one of the flip-flops (261-263) comprises two diodes (265, 266) each connected to the output (S1A-S1C) of one of the other two flip-flops).

7. Locator according to Claim 5, characterised in that the detector (27) of the second sensor reached includes three monostable flip-flops (272) each of them receiving :
— on its signal input the signal produced by an OR gate (271) from two of the received signals (EA-EC) ;
— on its reset input (CLR) the signal ($\overline{S1A}$-$\overline{S1C}$) corresponding to the complementary output of the flip-flop (261-263) corresponding to the remaining signal (EA-EC) ;
— and the complementary output ($\overline{Q}$) being connected to two AND gates (273, 274) each producing the sum of one of the two signals (EA-EC) combined at the input of the flip-flop (272), the outputs of the detector (27) being combinations of signals (S2A-S2C) taken in pairs.

8. Locator according to Claim 3, characterised in that the identical curve generators (6-9) are two concentric circle generators, each including a concentric circle generator, each including a sine wave voltage generator (6 or 8) and a cosine wave voltage generator (7 or 9).

9. Locator according to Claim 3 or 8, characterised in that the pulse generator (16) also includes a device for calibrating the closed circuit speed of propagation of the sound waves in the structure.

10. Locator according to Claim 9, characterised in that the calibrating device includes a potentiometer which, adjusted by the user, supplies an analog voltage proportional to the speed of propagation of the sound waves.

11. Locator according to Claim 9, characterised in that the calibrating device includes :
— a switch which puts one of the sensors (22-24) in transmission mode ;
— a pulse generator connected to this sensor ;
— a voltage ramp generator synchronous with the test pulses ;
— a detector of the echo received by one of the sensors which blocks the ramp voltage, a signal being received the output voltage of the ramp generator then being indicative of the propagation time of the sound wave between two sensors and of the propagation speed of the sound wave, controls one pulse input on each of the circle generators (6-9).

12. Locator according to Claim 5, characterised in that the phase generator (20) includes preselections of the initial phase of the curve generators (6-9) and a switch which selects them in accordance with the signals (S1) supplied by the detector (26) of the first sensor reached.

13. Locator according to Claim 12, characterised in that the preselections include voltage sources of predetermined values each corresponding to an initial position of each of the two beams on either side of the image (A') on the screen (5) of the first sensor reached (A).

14. Locator according to Claim 12, characterised in that the voltage sources include polarized switching transistors which, on receiving a control signal on their base, output a predetermined voltage.

15. Locator according to Claim 13, characterised in that the voltage sources include resistors connected as divider bridges with predetermined ratios.

16. Locator according to Claim 5, characterised in that the scale factor generator (35) includes a voltage source which controls the output level of the curve generators (6-9).

17. Locator according to Claim 16, characterised in that the voltage source of the scale factor generator is adjusted by a potentiometer indicating the respective dimensions of the monitored structure and of its image on the screen (5).

18. Locator according to Claim 4 or 7, characterised in that the Wehnelt control generator includes :
— a first OR gate (191) which outputs the product of the signals (S2) corresponding to the second sensor reached located after the first sensor reached in the trigonometric direction, and connected to a first amplifier (192) which produces a bright-up pulse (W1) of predetermined duration ;
— a second OR gate (193) which outputs the product of the signals (S2) corresponding to the second sensor reached located after the first sensor reached in the trigonometric direction and a second amplifier (194) which produces a bright-up pulse (W2) of predetermined duration.

19. Locator according to Claim 2, characterised in that the means of control of the display means include :
— a pulse generator (31) ;

11

— a clock (30) which increments by one unit each time a pulse is received from the pulse generator (30) ;

— a ROM (Read Only Memory) (32) of which each address relating to a geometric position on the wave path contains a numerical value relating to the position of a point in the image of the structure on the screen (5) ;

— a switch (322) controlled by the output (310) of the two-output pulse generator (31) ;

— two identical curve generators (33, 34) which receive via the switch (322) the numerical values in memory (32) which enable them to supply control voltages appropriate to the means of deflection (3, 4, 30, 40) of the display means.

20. Locator according to Claim 18, characterised in that the ROM memory (32) is at each clock (30) period incremented, the address that is read corresponding to the beam rotating in the trigonometric direction, and decremented, the address that is read corresponding to the beam rotating in the trigonometric direction.

21. Locator according to one of Claims 18 or 19, characterised in that the scale factor generator (35) includes :

— a RAM memory (353) having a capacity at least equal to that of the ROM memory (32) ;

— an auxiliary memory (354) ;

— a counter (355) ;

— a voltage control amplifier with programmable gain (356) the output of which is connected to the curve generators (6-9).

22. Locator according to Claim 20, characterised in that the memory (354) is a register which contains the address of the swept point and of which the output, immediately available, is connected to the ADDRESSES input of the RAM memory (353).

23. Locator according to Claim 20 or 21, characterised in that the RAM memory (353) can be written into only if the Wehnelt control function produced W1-W2 is at the active level because of an « OR » gate (352) which receives W1 on its input (350) and W2 on its input (351) and of which the output is connected to the read and write terminals (READ, WRITE) of the memory (353).

24. Locator according to Claim 20 or 22, characterised in that the counter (355) receives the content of a memory cell (353) addressed by the memory (354) and increments it by one unit and in that the output value of the counter (355) is on the one hand rewritten at the same address and on the other hand supplied as a control of the amplifier (356).

25. Locator according to any of the preceding claims, characterised in that the located structure is a V-shaped strip of welding of circular section between two butt-jointed cylindrical tubes.

**Ansprüche**

1. Akustisches Sendegerät zur Fehlerortung in Gefügen, in welchen die Schallwellen geschlossene Strecken durchlaufen, dadurch gekennzeichnet, dass die Strecken über Aufzeichnungsmittel (1, 2, 10) auf optische Anzeigemittel (3, 4, 5, 30, 40) dargestellt werden, und dass das Ortungsgerät Schallaufnehmer (22-24) und Mittel zum Formen der erhaltenen Signale, sowie eine Enkodierlogik (26-27) für den chronologischen Signalempfang aufweist, die einerseits Mittel (16, 20, 35) zum Steuern der optischen Anzeigemittel und Mittel (19) zum Steuern der Aufzeichnungsmittel aktiviert, wobei beim Fehlerauffinden eine Fehlerspur auf dem Bild der durch die optischen Anzeigemittel dargestellte Strecke aufgezeichnet wird.

2. Fehlerortungsgerät nach Anspruch 1, dadurch gekennzeichnet, dass es mindestens drei über die Fläche des kontrollierten Gefüges gleichmässig verteilte Aufnehmer (22-24) umfasst, die mit den Formern der empfangenen Signale verbunden sind, und dass die Enkodierlogik für den chronologischen Eingang der Signale nach der erneuten Formung einen Detektor (26) des zuerst erreichten Aufnehmers umfasst, wobei dieser Detektor die Steuermittel (16, 20, 35) der optischen Anzeigemittel aktiviert, sowie einen Detektor (27) des an zweiter Stelle erreichten Aufnehmers, welcher die Steuermittel (19) der Aufzeichnungsmittels aktiviert.

3. Fehlerortungsgerät nach Anspruch 2, dadurch gekennzeichnet, dass die optischen Anzeigemittel eine Bilschirmkathodenstrahlröhre (5) mit zwei über Ablenkmittel (3, 4) oder (30, 40) gesteuerte Strahlenbündel und zwei gleichartige Kurvengeneratoren (6-9) umfassen, wobei der erste (6, 7) mit den ersten Ablenkmitteln (3, 4) und der zweite (8, 9) mit den zweiten Ablenkmitteln (30, 40) verbunden ist, und dass die Kurvengeneratoren (6, 9) über einen Impulsgeber (16), einen Phasengeber (20) und einen Skalenfaktorgenerator (35) gesteuert werden, welche die Steuermittel (16, 20, 35) der optischen Anzeigemittel (3, 4, 5, 30, 40) bilden.

4. Fehlerortungsgerät nach Anspruch 3, dadurch gekennzeichnet, dass die Aufzeichnungsmittel der optischen Anzeigemittel Wehnelt-Steuerungen (W1, W2) umfassen, und dass die Mittel zum Steuern der Aufzeichnungsmittel einen Wehnelt-Steuergenerator (19) aufweisen.

5. Fehlerortungsgerät nach Anspruch 2, dadurch gekennzeichnet, dass der Detektor (26) des zuerst erreichten Aufnehmers drei monostabile Kippschaltungen (261-263) mit einstellbarer Zeitkonstante aufweist, wobei das von einem der Aufnehmer empfangene Signal an die jeweiligen Eingänge (EA-EC) gelegt wird und die jeweiligen Initialisierungseingänge (267) über eine Rücklaufsperrvorrichtung (265, 266) ein Sperrsignal empfangen, während der Detektor (26) bei jedem Empfang nur ein den zuerst erreichten Aufnehmer darstellendes Signal (S1A-S1C) und dessen komplementäre Logik ($\overline{S1A}$-$\overline{S1C}$) abgibt.

6. Fehlerortungsgerät nach Anspruch 5, dadurch gekennzeichnet, dass die Rücklaufsperrvorrichtung, welche den Initialisierungseingang irgendeiner der Kippschaltungen (261-263) steuert, zwei Dioden umfasst, die jeweils mit dem Ausgang (S1A, S1C) einer der beiden anderen Kippschaltungen verbunden sind.

7. Fehlerortungsgerät nach Anspruch 5, dadurch gekennzeichnet, dass der Detektor (27) des an zweiter Stelle erreichten Aufnehmers drei monostabile Kippschaltungen (272) umfasst, die jeweils empfangen ;

— über ihren Signaleingang das von einem ODER Tor (271) zweier empfangener Signale (EA-EC) erzeugte Signal ;

— über ihren Rücksetzeingang (CLR) das dem Komplementärausgang der Kippschaltung (261-263) entsprechende Signal ($\overline{S1A}$-$\overline{S1C}$) — bezüglich des Restsignals (EA-EC) — wobei der Komplementärausgang ($\overline{Q}$) mit zwei UND Tore (273, 274) verbunden ist, die jeweils die Summe eines der beiden am Eingang der Kippschaltung (272) zusammengesetzten Signale (EA-EC) bilden, und wobei die Ausgänge des Detektors (27) Kombinationen von gepaarten Signale (S2A-S2C) sind.

8. Fehlerortungsgerät nach Anspruch 3, dadurch gekennzeichnet, dass die identischen Kurvengeneratoren (6-9) zwei konzentrische Kreisgeneratoren sind, wobei jeder einen konzentrischen Kreisgenerator umfasst, und wobei jeder einen Sinusspannungsgenerator (6 bzw. 8) sowie einen Kosinusspannungsgenerator (7 bzw. 9) aufweist.

9. Fehlerortungsgerät nach Anspruch 3 oder 8, dadurch gekennzeichnet, dass der Impulsgenerator (16) ebenfalls eine Vorrichtung zum Eichen der Ausbreitungsgeschwindigkeit der akustischen Wellen in dem Gefüge in geschlossenem Kreise aufweist.

10. Fehlerortungsgerät nach Anspruch 9, dadurch gekennzeichnet, dass die Eichvorrichtung einen Potentiometer aufweist, der nach Einstellung durch den Bedienungsmann eine der Ausbreitungsgeschwindigkeit der akustischen Wellen proportionale Analogspannung abgibt.

11. Fehlerortungsgerät nach Anspruch 9, dadurch gekennzeichnet, dass die Eichvorrichtung folgende Teile umfasst :

— ein Schalter, der jeweils einen Fühler (22-24) in den Sendemodus versetzt ;

— ein an diesem Fühler angeschlossenen Impulsgenerator ;

— ein mit den Testimpulsen synchron geschalteten Sägezahnspannungsgenerator ;

— ein Detektor für das von einem Fühler empfangene Echo, der die Sägespannung sperrt — wobei ein Signal empfangen wird und die Ausgangsspannung des Sägezahnspannungsgenerators die Ausbreitungszeit der akutischen Welle zwischen zwei Fühlern sowie die Ausbreitungsgeschwindigkeit der akustischen Welle anzeigt — einen Pulseingang des jeweiligen Kreisgenerators (6-9) steuert.

12. Fehlerortungsgerät nach Anspruch 5, dadurch gekennzeichnet, dass der Phasengenerator (20) Vorwahlschaltungen der Ursprungsphase der Kreisgeneratoren (6-9) sowie einen Schalter umfasst, der diese entsprechend der durch den Detektor (26) des zuerst erreichten Fühlers abgegebenen Signale (51) wählt.

13. Fehlerortungsgerät nach Anspruch 12, dadurch gekennzeichnet, dass die Vorwahlschaltungen Spannungsquellen mit vorbestimmten Grössen aufweisen, wobei jede einer Ausgangslage von jedem der beiden Strahlenbündel an beiden Seiten des Bildes (A') auf dem Bildschirm (5) des zuerst erreichten Fühlers (A) entspricht.

14. Fehlerortungsgerät nach Anspruch 12, dadurch gekennzeichnet, dass die Spannungsquellen polarisierte Schalttransistoren umfassen, die auf ihrer Basis eine vorbestimmte Spannung an eine Steuerung abgeben.

15. Fehlerortungsgerät nach Anspruch 13, dadurch gekennzeichnet, dass die Spannungsquellen als Teilerbrücken von bestimmten Verhältniswerten montierte Widerstände aufweisen.

16. Fehlerortungsgerät nach Anspruch 5, dadurch gekennzeichnet, dass der Skalenfaktorgenerator (35) eine Spannungsquelle umfasst, welche die Ausgangshöhe der Kurvengeneratoren (6-9) steuert.

17. Fehlerortungsgerät nach Anspruch 16, dadurch gekennzeichnet, dass die Spannungsquelle des Skalenfaktorgenerators über einen Potentiometer eingestellt wird, der die jeweiligen Abmessungen des überwachten Gefüges und dessen Bildes auf dem Bildschirm (5) anzeigt.

18. Fehlerortungsgerät nach Anspruch 4 oder 7, dadurch gekennzeichnet, dass der Wehnelt-Steuergenerator (19) folgende Teile umfasst ;

— ein ODER-Tor (191), welches das Produkt der Signale (S2) abgibt, die dem hinter dem zuerst erreichten Fühler in trigonometrischer Richtung angeordneten, an zweiten Stelle erreichten Fühler entsprechen, und an einen ersten Verstärker (192) angeschlossen ist, der einen Leuchtimpuls (W1) mit vorbestimmter Dauer erzeugt ;

— ein zweites ODER-Tor (193), welches das Produkt der Signale (S2) abgibt, die dem hinter dem zuerst erreichten Fühler in trigonometrischer Richtung angeordneten, an zweiter Stelle erreichten Fühler entsprechen, und ein zweiter Verstärker (194), der einen Leuchtimpuls (W2) mit vorbestimmter Dauer erzeugt.

19. Fehlerortungsgerät nach Anspruch 2, dadurch gekennzeichnet, dass die Steuermittel der optischen Anzeigemittel umfassen :
— ein Pulsgenerator (31) ;
— ein Taktgeber (30), der bei jedem von dem Pulsgenerator (31) empfangenen Impuls um einen Schritt inkrementiert wird :
— ein Festwertspeicher ROM (32), bei welchem jede mit einer geometrischen Lage auf der Wellenstrecke in Zusammenhang stehende Adresse einen Digitalwert in Bezug auf eine Punkt-Lage des Gefügebildes auf dem Bildschirm (5) enthält ;
— ein Schalter (322), der über den Ausgang (310) des zwei Ausgänge aufweisenden Pulsgenerators (31) gesteuert wird ;
— zwei identische Kurvengeneratoren (33, 34), die über den Schalter (322) die Digitalwerte in dem Speicher (32) empfangen, wodurch diese an die Ablenkmittel (3, 4, 30, 40) der optischen Anzeigemittel passende Steuerspannungen abgeben können.

20. Fehlerortungsgerät nach Anspruch 18, dadurch gekennzeichnet, dass der Festwertspeicher ROM (32) bei jeder Periode des Taktgebers (30) inkrementiert wird, wobei die abgefragte Adresse dem drehenden Bündel in trigonometrischer Richtung entspricht, und dekrementiert wird, wobei die abgefragte Adresse dem drehenden Bündel in trigonometrischer Richtung entspricht.

21. Fehlerortungsgerät nach einem der Ansprüche 18 oder 19, dadurch gekennzeichnet, dass der Skalenfaktorgenerator (35) umfasst.
— ein Direktzugriffspeicher RAM (353) mit einer Kapazität, die mindestens der ROM Speicherkapazität (32) entspricht ;
— ein Hilfsspeicher (354) ;
— ein Zähler (355) ;
— ein Spannungssteuerverstärker (356) mit programmierbarer Verstarkung, wobei dessen Ausgang an die Kurvengeneratoren (6-9) angeschlossen ist.

22. Fehlerortungsgerät nach Anspruch 20, dadurch gekennzeichnet, dass der Speicher (354) ein Register mit der darin enthaltenen Adresse des Abtastpunktes ist, wobei der direkt zur Verfügung stehende Ausgang mit dem ADRESSEN Eingang des Speichers RAM (353) verbunden ist.

23. Fehlerortungsgerät nach Anspruch 20 oder 21, dadurch gekennzeichnet, dass der RAM Speicher (352) nur schreibbar ist wenn die erzeugte Steuerfunktion W1-W2 der Wehnelt einen aktiven Pegel durch ein ODER-Tor (352) aufweist, das W1 an seinem Eingang (350) und W2 an seinem Eingang (351) empfängt, wobei dessen Ausgang an die Lese- und Schreibklemmen (READ, WRITE) des Speichers (353) angeschlossen ist.

24. Fehlerortungsgerät nach Anspruch 20 oder 22, dadurch gekennzeichnet, dass der Zähler (355) den Inhalt einer von dem Speicher (354) adressierte Speicherzelle (353) aufnimmt, und diese um einen Schritt inkrementiert, und dass der Ausgangswert des Zählers (355) einerseits in derselben Adresse wieder geschrieben wird und anderseits als Steuerung des Verstärkers (356) abgegeben wird.

25. Fehlerortungsgerät nach einem der vorhergehenden Ansprüche, dadurch gekennzeichnet, dass das örtlich begrenzte Gefüge eine im Querschnitt kreisförmige « V » Schweissnaht zwischen zwei anstossenden Zylinderrohre ist.

14

FIG_1-a

FIG_1-b

FIG_3

FIG_4

FIG_5

FIG_2

# FIG_7

# FIG_8

# FIG_6

# FIG_9